(19) Europäisches Patentamt
European Patent Office
Office européen des brevets

(11) EP 0 579 052 B2

(12) NEUE EUROPÄISCHE PATENTSCHRIFT

(45) Veröffentlichungstag und Bekanntmachung des Hinweises auf die Entscheidung über den Einspruch:
**03.03.2004 Patentblatt 2004/10**

(45) Hinweis auf die Patenterteilung:
**29.11.2000 Patentblatt 2000/48**

(21) Anmeldenummer: **93110538.1**

(22) Anmeldetag: **01.07.1993**

(51) Int Cl.[7]: **A01N 25/02**, A01N 25/30

(54) **Pflanzenbehandlungsmittel**

Plant treatment agents

Agents pour le traitement de plantes

(84) Benannte Vertragsstaaten:
**AT BE CH DE DK ES FR GB GR IT LI NL SE**

(30) Priorität: **03.07.1992 DE 4221877**
**09.06.1993 DE 4319263**

(43) Veröffentlichungstag der Anmeldung:
**19.01.1994 Patentblatt 1994/03**

(60) Teilanmeldung:
**00106007.8 / 1 018 299**

(73) Patentinhaber: **Bayer CropScience AG**
**40789 Monheim (DE)**

(72) Erfinder: **Schönherr, Jörg, Prof. Dr.**
**28308 Winsen-Bannetze (DE)**

(56) Entgegenhaltungen:

| | |
|---|---|
| **EP-A- 0 113 857** | **EP-A- 0 116 229** |
| **EP-A- 0 235 773** | **EP-A- 0 257 686** |
| **EP-A- 0 391 168** | **EP-A- 0 453 899** |
| **WO-A-93/22917** | **DE-A- 1 904 072** |
| **DE-A- 2 303 757** | **DE-A- 2 554 532** |
| **DE-A- 4 221 877** | **DE-A- 4 319 263** |
| **FR-A- 846 794** | **GB-A- 2 157 952** |
| **JP-A- 63 239 204** | **JP-T1- 63 239 204** |
| **US-A- 3 188 194** | **US-A- 3 673 087** |
| **US-A- 3 963 432** | **US-A- 4 557 751** |

- **PESTICIDE SCIENCE, Bd.38, Nr.2&3, Juni 1993, BARKING,GB Seiten 155 - 164 'Papers from the 'Third International Symposium on Adjuvants for Agrochemicals' [..] held at Churchill College , Cambridge on 3-7 August 1992'**
- **JOURNAL OF AGRICULTURAL AND FOOD CHEMISTRY, Bd.12, Nr.3, 1964, WASHINTON, US; Seiten 223 - 227 L.L.JANSEN 'Enhancement of Herbicide Activity : Relation of Structure of Ethylene Oxide Ether-Type Nonionic Surfactants to Herbicidal Activity of Water-Soluble Herbicides'**
- **CENTRAL PATENTS INDEX, BASIC ABSTRACTS JOURNAL Week 7939, 21. November 1979 Derwent Publications Ltd., London, GB; AN 70713B/39 & JP-A-54 105 059 (OTSUKA KAGAKU YAKUHIN) 17. August 1979**
- **WEEDS, Bd.7, 1959, GAINESVILLE, FLA., US; Seiten 195 - 213 H.B.CURRIER & C.D.DYBING 'Foliar Penetration of Herbicides - Review and Present Status'**
- **PESTICIDE SCIENCE, Bd.3, Nr.3, 1972, BARKING, GB; Seiten 323 - 331 D.J.TURNER 'The Influence of Additives on the Penetration of Foliar Applied Growth Regulator Herbicides'**
- **CHEMICAL ABSTRACTS, vol. 106, no. 25, 22. Juni 1987, Columbus, Ohio, US; abstract no. 209356x, V.ALEKSIEVA ET AL. 'Growth-retardant activity of certain aliphatic dicarboxylic acids and their diethyl esters' & DOKL. BOLG. AKAD. NAUK., Bd.40, Nr.1, 1987 Seiten 85 - 88**
- **J. Schönherr und H. Bauer: "Analysis of effects of surfactants on permeability of plant cuticles", in C.L. Foy (ed.) "Adjuvants and Agrochemicals" , Boca Raton, Fla, US; 1992, Kapitel 2, Seiten 18 - 35**
- **PESTICIDE SCIENCE, Bd.33, 1991 BARKING, GB Seiten 411-420 "Mechanisms Controlling Leaf Retention of Agricultural Spray Solutions"**

EP 0 579 052 B2

## Beschreibung

Die Erfindung betrifft ein Pflanzenbehandlungsmittel in wässriger Form bzw. als Suspension/Emulsion für die oberirdische Ausbringung, enthaltend mindestens den fungiziden Wirkstoff Tebuconazole sowie an sich bekannte zusätzliche Hilfsstoffe und einen Akzelerator; und die Verwendung von Akzeleratoren in Pflanzenbehandlungsmitteln.

Pflanzenbehandlungsmittel in Form von Formulierungen, die einen oder mehrere Wirkstoffe enthalten, und Hilfsstoffe oder Adjuvantien sind bekannt. So werden in Bioziden meist Tenside zugesetzt, um die Benetzungsfähigkeit der Blätter zu verbessern. Emulgatoren und Lösungsmittel werden verwendet, um Wirkstoffe mit geringer Wasserlöslichkeit entweder als Emulsion oder als Suspension unter Verwendung von Wasser als Träger ausbringen zu können.

So beschreibt die DE-32 10 869 eine konzentrierte wässrige Biozid-Suspension, die neben einem Wirkstoff nichtionogene Tenside als Dispergiermittel enthält. Als nichtionogene Tenside werden dabei Polyoxyethylen-Phenylphenolether, Polyoxyethylen-Styrolphenolether und ähnliche Verbindungen vorgeschlagen. Diese langkettigen verzweigten Ether weisen demnach ein hohes Molekulargewicht auf

In der EP-0 257 533 wird eine wässrige fungizide Dispersion beschrieben. Als Tenside werden hierbei eine Kombination von Ethylenoxid-Propylenoxid-Blockpolymeren mit Alkanolen oder Arylphenolen vorgeschlagen. Diese Tenside, die wiederum langkettige Polymere sind, weisen ein Molekulargewicht zwischen 1000 und 20.000 auf.

In der DE-36 31 558 wird eine Suspoemulsion von Pflanzenschutzwirkstoffen vorgestellt, die ebenfalls Ethylenoxid-Propylenoxid-Blockpolymere als Tenside enthält.

Die bisher in Pflanzenschutzmitteln verwendeten Tenside sind demnach langkettige und z.T. verzweigte ethoxylierte Alkohole oder Blockpolymere mit einem sehr hohen Molekulargewicht. Dies ist auch verständlich, da die Formulierer bisher Tenside nach ihrer Eigenschaft als Emulgatoren ausgewählt haben und deshalb entsprechend langkettige ethoxylierte Alkohole bzw. Blockpolymere eingesetzt wurden, da diese ausgezeichnete Emulgatoreigenschaften besitzen. Diese Tenside können aber wegen ihrer Größe entweder gar nicht oder viel zu langsam in die Kutikeln eindringen und können demnach nicht als Beschleuniger wirken. Dies hat zur Folge, dass meist so viel Wirkstoff pro Hektar ausgebracht werden muss, bis eine zufriedenstellende Wirkung erzielt wird. Dass dabei oft nur wenige Prozente der Wirkstoffmenge zum Wirkort gelangen, der Rest aber diffus in die Umwelt gelangt, wird in Kauf genommen. Diese Vorgehensweise ist aber in Zukunft nur schwer durchzuhalten. Genehmigungsbehörden und die Öffentlichkeit drängen immer nachhaltiger auf verbesserte Methoden auch im Pflanzenschutz.

Aus der Veröffentlichung in Pestizide Science 38, 155-165 (1993) geht hervor, daß sich Alkohole und deren Ethoxylate zur Verbesserung der Penetration des herbiziden Wirkstoffes 2,4-D einsetzen lassen. Eine entsprechende Anwendung bei Fungiziden wird nicht offenbart. Ferner geht auch der Inhalt des in dieser Druckschrift unter der Fußnote 9 zitierten Artikels nicht über die Druckschrift selbst hinaus.

Wie der Veröffentlichung in Weeds 7, 195-213 (1959) zu entnehmen ist, lässt sich die Wirksamkeit von Herbiziden mit Hilfe von Penetrationsförderern steigern. Verbindungen des erfindungsgemäß zu verwendenden Typs werden aber ebensowenig genannt wie Fungizide.

Aus der JP-A 54-105 059 geht hervor, dass Ethoxylate von höheren Alkoholen als Penetrationsförderer für einen bestimmten Pflanzenwuchsregulator in Frage kommen. Ein Einsatz dieser Ethoxylate bei anderen Stoffen wird jedoch nicht erwähnt.

Aus der DE-A 2 554 532, der US-A 3 963 432 und dem Artikel in J. Agric. Food Chem. 12, 223-227 (1964) ist bekannt, dass sich Alkanol-Ethoxylate als oberflächenaktive Stoffe in Pflanzenbehandlungsmitteln eignen. Die Verwendung solcher Exthoxylate zur Verbesserung der Pentration der aktiven Komponenten wird allerdings nicht offenbart.

Gemäß US-A 3 673 087 können Ethoxylate von Alkoholen als Netzmittel in Pflanzenbehandlungsmitteln fungieren. Und schließlich wird in der FR-A 846 794 mitgeteilt, dass Octanol in Formulierungen von agrochemischen Stoffen als Dispergiermittel wirkt. In keiner dieser beiden Druckschriften wird die Verwendung von Verbindungen des erfindungsgemäß einsetzbaren Typs als Penetrationsförderer beschrieben.

Aufgabe der vorliegenden Erfindung ist es, ein Pflanzenbehandlungsmittel anzugeben, das einen Zusatzstoff enthält, der ein Eindringen in die Kutikeln der Blätter direkt zum Wirkort beschleunigt. Der zusätzliche Hilfsstoff soll dabei aus Naturstoffen herstellbar sein oder selbst ein Naturstoff sein, um eine gute biologische Abbaubarkeit zu garantieren.

Die Erfindung wird durch die kennzeichnenden Merkmale der Ansprüche 1 und 2 gelöst. Der Unteranspruch 3 stellt ein vorteilhafte Weiterbildung dar.

Im Sinne der Erfindung werden unter Pflanzenbehandlungsmittel insbesondere Mittel zum Schutze vor Krankheiten (Fungizide) verstanden. Sie enthalten einen oder mehrere fungizide Wirkstoff (töten Pilze), wovon mindestens einer Tebuconazole ist.

Pflanzenbehandlungsmittel in wässriger bzw. in Form von Emulsionen kommen dabei als Formulierungen in den Handel. Formulierungen sind Rezepturen, die neben dem Wirkstoff verschiedene andere Stoffe, sogenannte Hilfsstoffe oder Adjuvantien, enthalten.

Die Ausbringung derartiger Pflanzenbehandlungsmittel erfolgt dabei am häufigsten durch Spritzen auf die Blätter. Das hat verschiedene Gründe:

1. Die Ausbringung ist billig und bequem.

2. Viele Wirkstoffe werden im Boden festgelegt und/oder durch Mikroorganismen schnell abgebaut.

3. Wirkstoffe, die eine sehr geringe Wasserlöslichkeit haben, werden von den Wurzeln sehr schlecht aufgenommen und in den Pflanzen nicht transloziert. Solche Stoffe können die Wirkorte in den Blättern gar nicht erreichen und sind wirkungslos, wenn sie über dem Boden appliziert werden. Der Schutz des Bodens und des Grundwassers ist ein weiterer Grund dafür, dass Pflanzenbehandlungsmittel bevorzugt auf die oberirdischen Organe der Pflanzen ausgebracht werden.

Von den oberirdischen Organen spielen die Blätter bei der Aufnahme von Pflanzenbehandlungsmitteln die wichtigste Rolle. Die Haut der Blätter ist mit einer dünnen Polymermembran überzogen, die sogenannte Kutikula. Sie bildet die Grenzschicht zur Umwelt und dient dem Schutz gegen Wasserverlust und Infektion durch Schadorganismen. Die Kutikula hat eine extrem geringe Durchlässigkeit für Wasser und für wasserlösliche Stoffe, insbesondere für Ionen. Je lipophiler die Stoffe sind, um so größer ist die Durchlässigkeit der Kutikeln. Der Grund für die geringe Permeabilität der Kutikeln ist die Tatsache, dass das Polymer mit Wachsen imprägniert ist. Diese Wachse sind mikrokristalline Festkörer, in denen die Diffusionskoeffizienten im Bereich von $10^{-16}$ bis $10^{-20}$ $m^2/s$ liegen. Zum Vergleich: In Wasser und anderen Flüssigkeiten liegen die Diffusionskoeffizienten bei $10^{-10}$ $m^2/s$. Alle systemischen Wirkstoffe müssen durch die Kutikula hindurch, ehe sie überhaupt wirksam werden können. Solche Stoffe müssen aber auch im Gewebe und in den Transportbahnen transloziert werden. Da dieser Transport in den Pflanzen immer in wässrigen Phasen stattfindet, müssen systemische Wirkstoffe eine hinreichende Wasserlöslichkeit haben. Das ist das Dilemma: Ist die Wasserlöslichkeit groß, dann verhindert die Kutikula die schnelle Aufnahme in die Blätter; aber die Stoffe werden gut transportiert. Ist dagegen die Wasserlöslichkeit sehr schlecht, dann ist zwar die Kutikula hinreichend permeabel, aber der Transport in der Pflanze ist unreichend. Es ist also eine der Aufgaben der Formulierungshilfsstoffe, die Kutikula für relativ polare Wirkstoffe hinreichend durchlässig zu machen, ohne dabei die Pflanzen zu schädigen. Das geht nur durch Erhöhung der Diffusionskoeffizienten der Wirkstoffe in den kutikulären Wachsen.

Erfindungsgemäß wurde nun gefunden, dass durch Zugabe der Verbindungen der allgemeinen Formel (I) zu dem Pflanzenbehandlungsmittel eine entscheidende Erhöhung des Diffusionskoeffizienten stattfindet. Diese Stoffe wirken demnach als Akzeleratoren, d.h. als Beschleuniger.

Im Sinne der Erfindung werden unter Akzeleratoren Stoffe verstanden, die die Mobilität der Wirkstoffe in der Kutikula deutlich erhöhen. Damit erhöht sich auch die Penetrationsgeschwindigkeit. Akzeleratoren wirken somit in der Kutikula und diese Wirkung ist unabhängig von den Wirkungen anderer Wirkstoffe, wie z.B. Emulgatoren, Lösungsvermittlern und Lösungsmittel.

Überraschenderweise hat sich gezeigt, dass ganz bestimmte Verbindungen ein Eindringen von in Pflanzenbehandlungsmitteln enthaltenen Wirkstoffen deutlich verbessern.

Es wurde nun gefunden, dass sich Verbindungen der Formel

$$H_3C-(CH_2)_n-O-(CH_2-CH_2-O)_m-H \qquad (I)$$

in welcher

n für eine ganze Zahl von 6 bis 12 steht und

m für 0 oder eine ganze Zahl von 1 bis 4 steht,

bzw. deren Mischungen als Akzeleratoren zur Förderung der Penetration des fungiziden Wirkstoffes Tebuconazole verwenden lassen

Außerdem gefunden wurden Fungizide in Form einerwäßrigen Lösung bzw. als flüssige Emulsion/Suspension, wobei diese Mittel neben Hilfsstoffen

- den fungiziden Wirkstoff Tebuconazole sowie
- mindestens einen Akzelerator der Formel (I) enthalten.

Die bisher aus dem Stand der Technik bekannten Emulgatoren verbesserten zwar die physikalischen Eigenschaften der Spritzbrühen, sie waren aber keine Akzeleratoren der Permeation der pflanzlichen Kutikeln.

Eine besonders bevorzugte Ausführungsform betrifft hierbei ein Pflanzenbehandlungsmittel mit der Verbindung (I), wobei n eine ganze Zahl von 6 bis 8 und m = 0 ist. Bei diesen linearen unsubstituierten Fettalkoholen mit 6 bis 8 C-Atomen handelt es sich zudem um reine Naturstoffe, so dass es hier keine Anwendungsbeschränkungen gibt. Es ist auch zweckmäßig, die Mischung verschiedener Alkohole der Kettenlänge $C_6$ bis $C_{12}$ bzw. $C_6$ bis $C_8$ als Beschleuniger der Aufnahme von Wirkstoffen in Blätter und andere oberirdische Pflanzenteile zu verwenden. Durch die Mischung lässt sich die Wirkungsdauer verlängern, weil die kurzen und eher flüchtigen Alkohole sehr schnell wirken und damit die Penetration der längeren Alkohole beschleunigen. Die Mischung ist auch leichter aus Naturprodukten zu gewinnen. Eine Reindarstellung erübrigt sich. Das verbilligt zudem das Produkt.

Wie aus den Abbildungen 1 und 2 ersichtlich, sind die ethoxylierten Alkohole insgesamt zwar weniger wirksam. Sie sind aber auch weit weniger flüchtig, so dass durch ihre Verwendung die Wirksungsdauer der Formulierung verlängert werden kann. Zweckmäßigerweise werden auch hier Mischungen verwendet. Die Notwendigkeit der Verwendung einer Mischung ergibt sich aber auch aus dem Herstellungsprozess. Ethoxylierte Alkohole werden aus den Alkoholen und Ethylenoxid-Veretherung hergestellt (Dr. A. Behler et al in "Henkel Referate", 26-990). Durch eine Steuerung der Reaktionszeit lassen sich dabei ethoxylierte Fettalkohole herstellen, deren Ethoxylierungsgrad zwischen 1 und 4 liegt. Eine Trennung ist nicht wirtschaftlich und - wie aus den Abbildungen hervorgeht - auch nicht erforderlich. Die Verbindungen sind alle aus Naturstoffen herstellbar.

Bevorzugt ist es weiterhin, Mischungen sowohl der linearen Fettalkohole als auch der ethoxylierten Fettalkohole mit kürzerer Kettenlänge zu verwenden. Die linearen unsubstituierten Fettalkohole sind zwar wirksamer als die ethoxylierten, wobei bei den ethoxylierten der Effekt noch mit der Anzahl der Ethoxygruppen zunimmt. Die ethoxylierten Alkohole weisen aber den Vorteil auf, dass sie weniger flüchtig sind. Dadurch wird bei dieser bevorzugten Ausführungsform sowohl der Vorteil der linearen Fettalkohole mit ihrer großen Erhöhung des Diffusionskoeffizienten als auch die Nichtflüchtigkeit der ethoxylierten vereint.

In zahlreichen Versuchen wurde dabei festgestellt, dass es vorteilhaft ist, wenn der Akzelerator in einer Menge von 50 g bis 1 kg der pro Hektar auszubringenden Spritzbrühe zugesetzt wird, oder wenn er in einer Konzentration von 0,01 bis 0,1 % in der Spritzbrühe vorliegt. Die Konzentration der Formulierung, d.h. die zugegebene Menge des Akzelerators hängt dabei sehr stark vom verwendeten Wirkstoff, den Pflanzenarten und ganz besonders von der Blattfläche, die zu besprühen ist, und den Mengen an kutikulären Wachsen ab.

Das Pflanzenbehandlungsmittel selbst kann dabei auf zwei verschiedenen Wegen hergestellt werden. Der Beschleuniger, d.h. der Akzelerator oder dessen Mischungen, kann dabei bereits bei der Herstellung, d.h. bei der Formulierung des jeweiligen Pflanzenbehandlungsmittels in der entsprechenden Menge zugegeben werden. Eine weitere Möglichkeit besteht darin, dass der Akzelerator in bereits fertige Formulierungen nachträglich zugefügt wird. Der Akzelerator könnte demnach vom Anwender zusammen mit dem Pflanzenbehandlungsmittel z.B. in den Tank der Spritze gegeben werden, wodurch sich die erforderliche Menge an Wirkstoff erheblich reduzieren ließe. Das würde Kosten einsparen und gleichzeitig die Belastung der Umwelt mit Bioziden reduzieren.

Somit eröffnen sich mit den erfindungsgemäßen Pflanzenbehandlungsmitteln völlig neue Verfahren.

Mit dem erfindungsgemäßen Pflanzenbehandlungsmittel, das einen Beschleuniger erhält, lassen sich demnach wirksamer Pilzkrankheiten bekämpfen, als es mit bisherigen Mitteln möglich war.

Die Akzeleraforen lassen sich demnach in sämtlichen bisher bekannten Pflanzenbehandlungsmitteln verwenden.

Die Erfindung wird anhand der Abbildungen 1 bis 16 näher erläutert. Es zeigen:

| | |
|---|---|
| Abb. 1 und 2 | Desorptionsgraphen für verschiedene Testsubstanzen der allgemeinen Formel (I), |
| Abb. 3 und 4 | Effektgraphen für unterschiedliche Testsubstanzen der allgemeinen Formel (I); |
| Abb. 5 bis 8 | Effektgraphen für unterschiedliche Testsubstanzen der allgemeinen Formel (I), uber mit m=5-8 (nicht zur Erfindung gehörig) |
| Abb. 9 | die Abhängigkeit der Akzeleratorwirkung von der Konzentration, bei einer Verbindung der Formel (I), aber mit m=5 (nicht zur Erfindung gehörig) |
| Abb. 10 | Akzeleratoreffekte für verschiedene Pflanzenarten bei einer Verbindung der Formel (I), aber mit m=6 (nicht zur Erfindung gehörig) |
| Abb. 11 bis 13 | vergleichende Darstellungen über den Maximum-Effekt von verschiedenen Alkoholen wie auch ethoxylierten Alkoholen, und |
| Abb. 14 | Abhängigkeit des Effektes der Akzeleratoren von ihren Kutikula/Wasser Verteilungskoeffizienten |

($K_{cw}$),

Abb. 15 den Einfluss von $C_8E_4$ auf die Diffusionskoeffizienten (D) ausgewählter Organika in der Kutikula, als Funktion von $1/k_{pis}$ ($k_{pis}$ ist proportional zu (D) vor der Behandlung mit Akzeleratoren),

Abb.16 den Einfluss der Akzeleratoren der Formel (I) ($C_{10}E_2$), des Tributylphosphats (TBP) und des Dibutyladipats (DBA) auf die Penetration von Tebuconazole durch die Stephanotis CM (Konzentrationen in Mol/Liter).

Zum besseren Verständnis der Abbildungen werden nachfolgend einige Grundlagen abgehandelt.

Die Oberflächen der Blätter sind von sehr dünnen Häutchen überzogen, die Kutikeln genannt werden. Kutikeln sind Polymermembranen, die sich wie folgt zusammensetzen: In eine Matrix aus unlöslichen vernetzten Hydroxyfettsäuren sind an der Grenzfläche zur Luft Wachse eingebettet und aufgelagert. Die Inkrustierung der Polymermatrix mit Wachsen verleiht den Kutikeln eine sehr niedrige Permeabilität für Wasser und andere Stoffe. Durch die partielle Inkrustierung mit Wachsen erhält die Kutikula Laminatstruktur. Die Innenseite der Kutikeln besteht aus dem Polymer, und diese Region macht etwa 90 % der gesamten Masse der Kutikula aus. Diese Schicht ist bei Pomeranzenblättern (Citrus) etwa 2 bis 3 μm dick. Die mit Wachs inkrustierte Schicht liegt außen auf und ist nur etwa 0,1 bis 0,3 μm dick.

Die meisten Versuche wurden mit enzymatisch isolierten Kutikeln von Pomeranzenblättern (Citrus CM) durchgeführt, weil es sich dabei um besonders gute Barrieren handelt.

Einige Versuche wurden auch mit isolierten Kutikeln (CM) von anderen Pflanzenarten (Blätter von Birnen, Kirschlorber, Zitronen, Tee, Stephanotis, Eisenholz und von Tomaten- und Paprikafrüchten) durchgeführt (siehe Abb. 10).

Zwei verschiedene Arten von Versuchen wurden durchgeführt, um die Wirksamkeit der Akzeleratoren zu testen und zu demonstrieren. UDOS (unilateral desorption from the outer surface) diente dazu, die Mobilität der Wirkstoffe in der Kutikula und die Effekte der Akzeleratoren auf die Mobilität zu messen. Ob die so ermittelten Akzeleratoreffekte auf die Stoffmobilität in der Kutikula sich auch die Wirkstoffpermeabilität auswirken, wurde mittels SOFU (simulation of foliar uptake) überprüft.

**UDOS**

Vor Versuchsbeginn wurde die innere Polymerschicht der isolierten Kutikula mit einer $^{14}C$-markierten Modellsubstanz beladen. Als Modellsubstanzen wurden Harnstoff (kleines und sehr polares Molekül), 2,4-Dichlorphenoxyessigsäure (2,4-D), bzw. Tebuconazole (ein sehr großes und sehr unpolares Molekül) eingesetzt.

2,4-D wurde als Modellsubstanz ausgewählt, weil es eine mittlere Molekülgröße und mittlere Polarität hat. Das in der Polymerschicht sorbierte 2,4-D wird dann von der Außenseite unter Verwendung eines Phospholipid-Suspension (PLS) desorbiert. PLS ist ein inertes Desorptionsmedium, es verändert die Kutikeln weder chemisch noch strukturell. Nennt man die zur Zeit t desorbierte Menge $M_t$, und die anfänglich in der Kutikula (CM = cutiular membrane) enthaltende Menge 2,4-D $M_o$, dann lässt sich der Desorptionsverlauf als Prozess erster Ordnung mit der folgenden Gleichung beschreiben:

$$- 1n(1-M_t/M_o) = kt$$

Wird also der Logarithmus der relativen Menge (= die Konzentration) von 2,4-D gegen die Zeit ausgetragen, so ist die Steigung der Geraden die Geschwindigkeitskonstante der Desorption, die dem Diffusionskoeffizienten von 2,4-D in der mit Wachsen inkrustierten äußeren Schicht der Kutikula proportional ist. Das heißt, k ist ein Mobilitätsparameter, und der Einfluss der freien und der ethoxylierten Fettalkohole und der anderen Akzeleratoren auf die Mobilität von 2,4-D lässt sich folglich quantifizieren, indem man den Einfluss der Akzeleratoren auf k mißt.

Dabei wurde wie folgt vorgegangen:

Zunächst wird für jede CM die Geschwindigkeitskonstante (k) unter Verwendung von PLS als Desorptionsmedium gemessen, wobei k der Steigung der Geraden bis zum Pfeil (Abb. 1) entspricht. Danach (nach vier Tagen) wurde das Desorptionsmedium gewechselt. In diesem Fall war es Octanol (n = 7) bzw. ethoxylierter Octanol (Ethoxylierungsgrad m = 1 bis 5). Je nach Wirksamkeit der Desorptionsmedien ändert sich die Steigung der Graphen entweder plötzlich oder allmählich. Im ersten Fall ergibt sich eine neue konstante und größere Geschwindigkeitskonstante, im zweiten Fall ist die Geschwindigkeitskonstante zeitabhängig, sie nimmt mit der Zeit zu (z.B. m = 5). Das Verhältnis der Geschwindigkeitskonstanten, die mit Akzelerator bzw. mit PLS gemessen wurden, ist der Effekt des Akzelerators. Ist $k_{tensid}/k_{pis}$ = 1, dann ist der Akzelerator wirkungslos. Ist das Verhältnis größer als 1, dann wird durch den Akzelerator der Difrusionskoeffizient in der wachsinkrustierten Schicht um den entsprechenden Faktor erhöht.

Graphen - wie der in Abb. 1 - werden als Desorptions-Graphen bezeichnet. Trägt man den für jede einzelne CM bestimmten Effekt gegen den Kehrwert der mit PLS bestimmten Geschwindigkeitskonstanten auf (1/k, bzw. $k^{-1}$), so erhält man einen sogenannten Effekt-Graphen (Abb. 3). Es wurde dabei immer der maximale Effekt, der gemessen worden ist, aufgetragen.

Die Abb. 1 und 2 zeigen exemplarisch die Abhängigkeit der Reaktionsgeschwindigkeit der Desorption von den Eigenschaften der Testsubstanzen. Abb. 1 zeigt die Abhängigkeit von ethoxyliertem Octanol mit m = 0 bis 5; Abb. 2 von ethoxyliertem Decanol mit m = 1 bis 8. Bei hochwirksamen Stoffen wird der Desorptionsgraph sehr schnell wieder linear. Mit zunehmender Länge der Moleküle, d.h. auch mit steigendem Ethoxylierungsgrad, werden die Desorptionskurven zeitabhängig. Das liegt daran, dass die Akzeleratoren in die Kutikula eindringen müssen, damit sie die Mobilität des 2,4-D überhaupt erhöhen können. Dieser Prozess dauert um so länger, je größer die Moleküle sind. Die Steigung der Graphen nimmt solange zu, bis die Konzentration des Tensides in der CM mit der Aussenlösung (das Desorptionsmedium hatte immer eine Konzentration von 0,025 Mol $L_{-1}$) im Gleichgewicht steht. Diese Gleichgewichtseinstellung dauerte bei einigen Akzeleratoren nur wenige Stunden, bei anderen wude das Gleichgewicht auch nach 4 bis 5 Tagen Desorption nicht erreicht.

Die Effektgraphen (Abb. 3 bis 8) zeigen alle, dass der Effekt, der bei einer gegebenen CM gemessen wurde, immer proportional von $k^{-1}$ war, d.h. je niedriger die 2,4-D Mobilität vor der Behandlung mit Akzelerator war, um so größer war der Effekt.

Abb. 3 zeigt den Maximum-Effekt für Citrus CM/2,4-D für verschiedene Alkohole (Octanol, Heptanol, Nonanol, Decanol).
Abb. 4 zeigt den Effektgraph für die Verbindung der allgemeinen Formel (I) mit n = 7 (d.h.: Octanol) und m = 3;
Abb. 5 für n = 9 (Decanol) mit m = 5;
Abb. 6 für n = 11 mit m = 6;
Abb. 7 für n = 13 mit m = 7, und
Abb. 8 für n = 15 mit m = 8.

Bei sehr wirksamen Akzeleratoren gehen die Effektgraphen alle durch Null und eine sehr gute Linearität ist sichtbar (Abb. 3 bis 5). Je steiler die Gerade, um so stärker war die Wirkung des Akzelerators. In Abb. 3 kann man sehen, dass die Steigungen für Heptanol, Octanol und Nonanol sehr ähnlich sind, während die Steigung für Decanol bereits deutlich geringer ist. Die Effekte reichen von 5 bis 50, je nach $k^{-1}$.

Mit zunehmender Größe der Akzeleratoren nimmt die Steigung der Effektgraphen ab; die Effekte werden kleiner, es dauert länger, bis maximale Effekte erreicht werden, und die Anpassungen an eine Gerade werden schlechter (Abb. 7, 8). Erfindungsgemäß ist deshalb eine Verbindung der Formel (I) als Akzelerator am besten geeignet, wenn n maximal = 12 und m maximal = 4 ist.

Da die Wirkung von der Akzeleratorkonzentration in der Kutikula abhängt, ist sie auch von seiner Konzentration im Desorptionsmedium abhängig (Abb. 9). Sinkt sie unter eine bestimmte kritische Konzentration, dann dauert es länger, bis die maximalen Effekte auftreten (hier nicht dokumentiert), und die Effekte sind niedriger. Abb. 9 zeigt die Konzentrationsabhängigkeit von Decanol mit m = 5.

Die für Citrus gezeigten Effekte auf die Mobilität von 2,4-D wurden auch für Kutikein von anderen Arten beobachtet (Abb. 10) und es ist zu erwarten, dass sie bei allen Arten auftreten. Abb. 10 zeigt am Beispiel von n = 11 und m = 6 den Effekt für Citrus-Blätter 1, Birnen-Blätter 2, Tomatenfrüchte 3 und Paprikafrüchte 4. Dabei gelten die folgenden Gesetzmäßigkeiten:

(i) Die maximalen Effekte werden um so schneller erreicht, je höher $k_{pis}$ ist (hier nicht dokumentiert).

(ii) Die Effekte sind um so größer, je niedriger $k_{pis}$ ist (Abb. 10).

Akzeleratoren der allgemeinen Formel (I) erhöhen auch die Mobilität anderer Substanzen in der Kutikula, d. h. sie sind nicht spezifisch für 2,4-D. Auch hier gilt die obengenannte Gesetzmäßgkeit: je niedriger die Mobilität der Stoffe in der CM (d.h. $k_{pis}$), um so größer ist der Effekt.
(Abb. 15: n = 7, m = 4). 2,4 D ist mit einem Pfeil markiert. Die weiteren Kreise zeigen verschiedene andere Organika.

Innerhalb der Formel (I) sind immer die unsubstituierten Alkohole am wirksamsten (Abb. 11 bis 14). Bei den Alkoholen waren die Wirkungen von Hexanol (n = 5) und Dodecanol (n = 11) deutlich niedriger, als die von Heptanol, Octanol, Nonanol und Decanol (Abb. 11). Bei Hexanol und Dodecanol waren die Effekte auch stark zeitabhängig und nahmen mit der Zeit zu.

Die Alkohole, vor allem die kurzkettigen, sind relativ flüchtig. Sie bieten sich also für Anwendungen an, bei denen ein schneller und vorübergehender Effekt angestrebt wird. Durch Ethoxylierung sinkt die Flüchtigkeit, aber auch der Effekt. Bei ethoxyliertem Octanol und Decanol sind aber auch die mittleren Effekte immer noch sehr hoch (Abb.

12 und 13).

Abb. 12 zeigt für Octanol (n = 7) und für m = 0 - 5 den entsprechenden Maximumeffekt, und

Abb. 13 für Decanol (n = 9) und für m = 0 - 8.

In Abb. 14 sind die Effekte gegen den log des Kutikula/Wasser-Verteilungskoeffizienten der Akzeleratoren aufgetragen, am Beispiel von verschiedenen Alkoholen mit unterschiedlichem Ethoxylierungsgrad. Der Effekt hängt innerhalb der homologen Reihe von der Polarität der Akzeleratoren ab.

Abb. 15 zeigt nun den Einfluss eines bestimmten Akzelerators, nämlich $C_8E_4$ aus der Gruppe I auf die Diffusionskoeffizienten D. Die leeren Kreise symbolisieren verschiedene Organika.

**<u>SOFU</u>**

Mit diesem Verfahren wird die Geschwindigkeit der Penetration durch die Kutikeln direkt gemessen. SOFU dient also der Verifizierung der Ergebnisse, die mittels UDOS gemessen worden sind.

Bei diesem Verfahren werden die radioaktiv markierten Wirkstoffe zusammen mit den Akzeleratoren in wässriger Lösung auf die Außenseite der Kutikeln appliziert (5 µl). Gleichzeitig wird von der Kutikulainnenseite desorbiert. Die Penetration verläuft zum größten Teil aus einem hydratisierten Rückstand auf der Kutikula, denn das Wasser der Lösung verdampft innerhalb von 30 Minuten.

Bei den Penetrationsgraphen wird auf der Ordinate entweder der Logarithmus der Menge aufgetragen, die noch auf der Kutikula ist (linke Seite), oder die relative Wirkstoffmenge, die auf der Kutikulainnenseite desorbiert worden ist (percent penetration, auf der rechten Seite). Die Kurven zeigen Mittelwerte von 10 bis 20 CM. Die Versuche wurden auf 24h begrenzt, weil bei guten Formulierungen mit richtigen Akzeleratoren nahezu die gesamte applizierte Dosis innerhalb von 24h in das Blatt eindringen sollte.

Dass die Wirkung der Akzeleratoren besonnders gross ist, wenn die Wirkstoffmobilität ohne Akzelerator besonders niedrig ist, wurde bereits mittels UDOS merfach gezeigt (vgl. Abb. 3 bis 6, 10, 15). Die Modellsubstanz Tebuconazole hat wegen ihres hohen Molekulargewichts nur sehr niedrige Diffusionsraten in der Kutikula. Daher sind auch die Penetrationsraten (Abb. 16) sehr niedrig, wenn kein Akzelerator zugesetzt wird (Wasser-Kontrolle). Durch Wahl des richtigen Akzelerators in der richtigen Menge kann die Penetrationsgeschwindigkeit erheblich beschleunigt werden, und das schon nach 2h.

**Patentansprüche**

1. Verwendung von Verbindungen der Formel

$$H_3C-(CH_2)_n-O-(CH_2-CH_2-O)_m-H \qquad (I)$$

in welcher

n für eine ganze Zahl von 6 bis 12 steht und

m für 0 oder für eine ganze Zahl von 1 bis 4 steht,

bzw. von deren Mischungen als Akzeleratoren zur Förderung der Penetration des fungiziden Wirkstoffes Tebuconazole in Pflanzenbehandlungsmitteln.

2. Fungizide Mittel in Form einer wässrigen Lösung bzw. als flüssige Emulsion/Suspension, **dadurch gekennzeichnet, dass** das Mittel neben Hilfsstoffen

- den fungiziden Wirkstoff Tebuconazole sowie
- mindestens eine Akzelerator der Formel (I) gemäß Anspruch 1

enthält.

**3.** Mittel gemäß Anspruch 2, **dadurch gekennzeichnet, dass** der Akzelerator in einer Menge von 50 g bis 1 kg in der pro Hektar auszubringenden Spritzbrühe enthalten ist.

## Claims

**1.** Use of compounds of the formula

$$H_3C-(CH_2)_n-O-(CH_2-CH_2-O)_m-H \qquad (I)$$

in which

n represents an integer from 6 to 12 and

m represents 0 or an integer from 1 to 4,

or of mixtures of these as accelerators for promoting the penetration of fungicidal active compound in plant treatment compositions.

**2.** Fungicidal composition in the form of an aqueous solution or as a liquid emulsion/suspension, **characterized in that** the composition contains, besides adjuvants,

- the fungicidal active compound tebuconazole and
- at least one accelerator of the formula (I) according to Claim 1.

**3.** Composition according to Claim 2, **characterized in that** the accelerator is present in an amount of 50 g to 1 kg in the spray mixture to be applied per hectare.

## Revendications

**1.** Utilisation de composés de formule :

$$CH_3 - (CH_2)_n - O - (CH_2 - CH_2 - O)_m - H \qquad (I)$$

dans laquelle

n représente un nombre entier allant de 6 à 12, et
m représente 0 ou un nombre entier allant de 1 à 4,

ou leurs mélanges, comme accélérateurs pour activer la pénétration de l'agent actif fongicide tébuconazole, dans des agents pour le traitement de plantes.

**2.** Agent fongicide sous forme d'une solution aqueuse ou comme émulsion/suspension liquide, **caractérisé en ce que** l'agent contient, en plus des auxiliaires,

- l'agent actif fongicide tébuconazole, ainsi que
- au moins un accélérateur de formule (I) suivant la revendication 1.

**3.** Agent suivant la revendication 2, **caractérisé en ce que** l'accélérateur est présent en une quantité allant de 50 g à 1 kg dans le bouillon de pulvérisation appliqué par hectare.

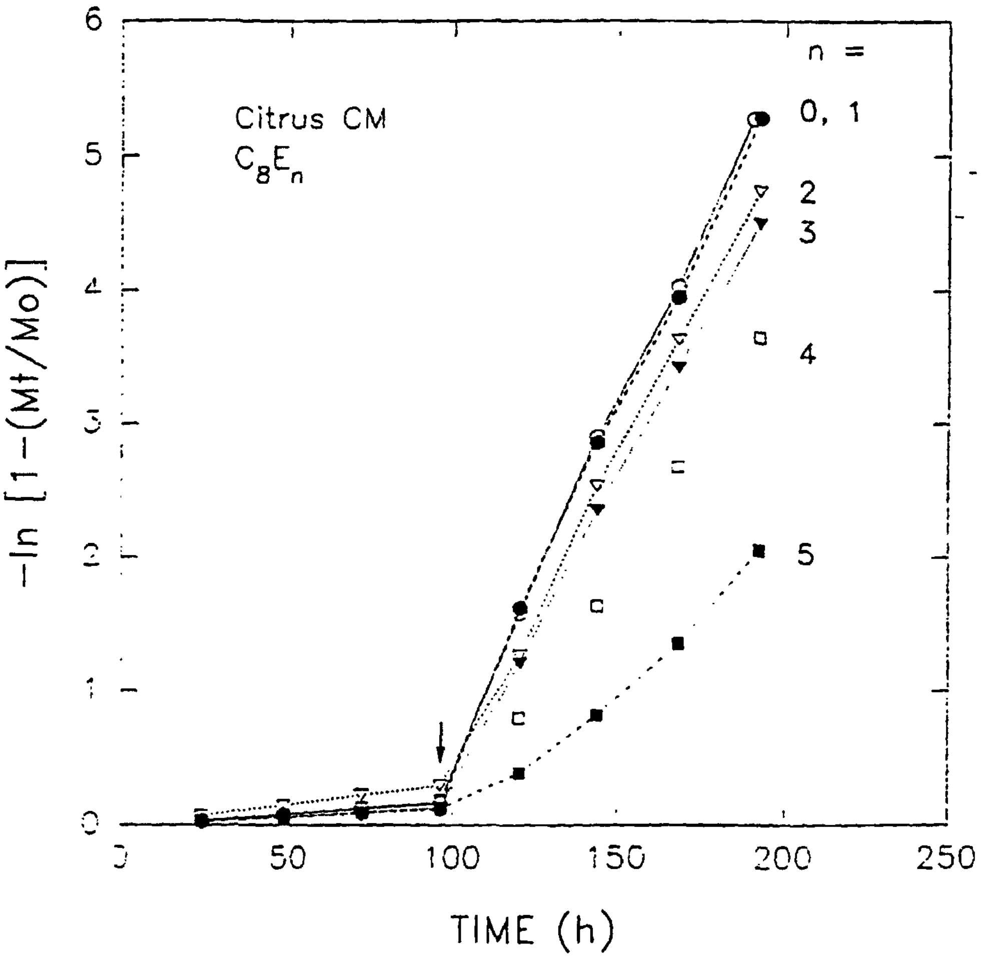

Citrus CM
$C_8E_n$
n =
0, 1
2
3
4
5
-ln [1-(Mt/Mo)]
TIME (h)
0
1
2
3
4
5
6
0
50
100
150
200
250


**Abbildung 1**

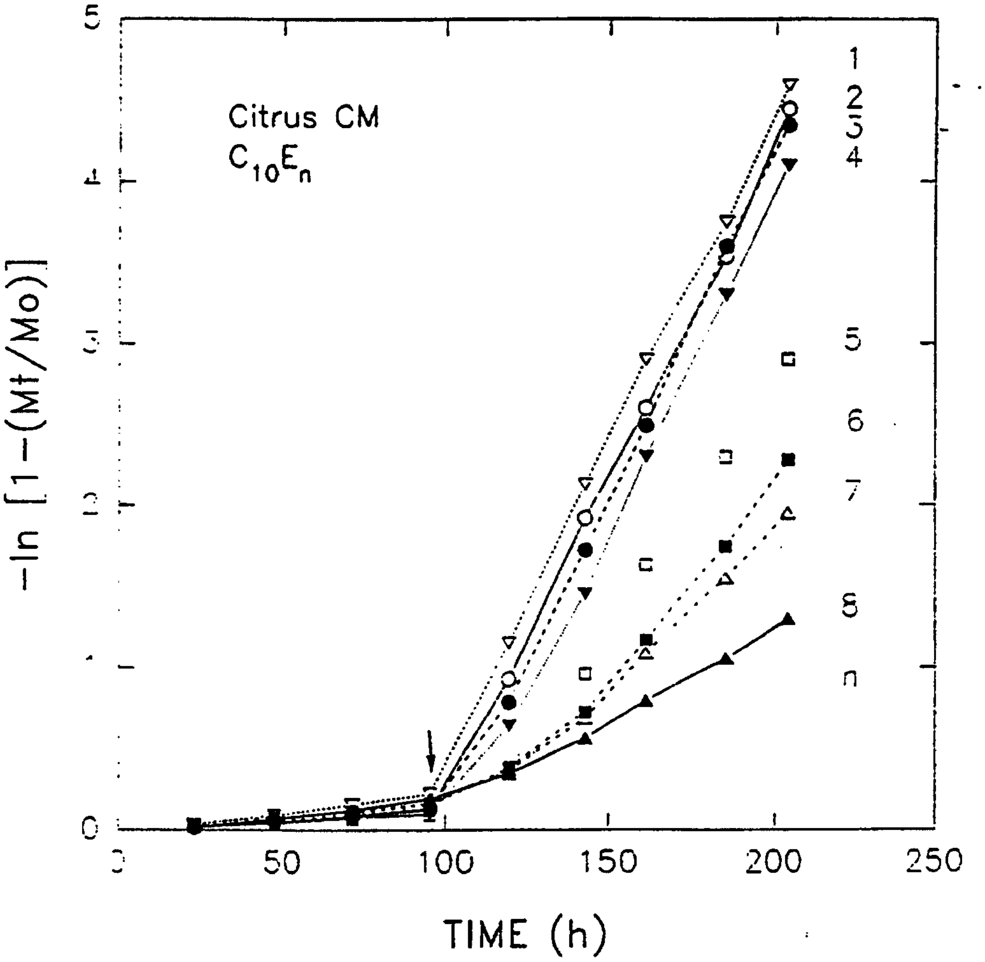


**Abbildung 2**

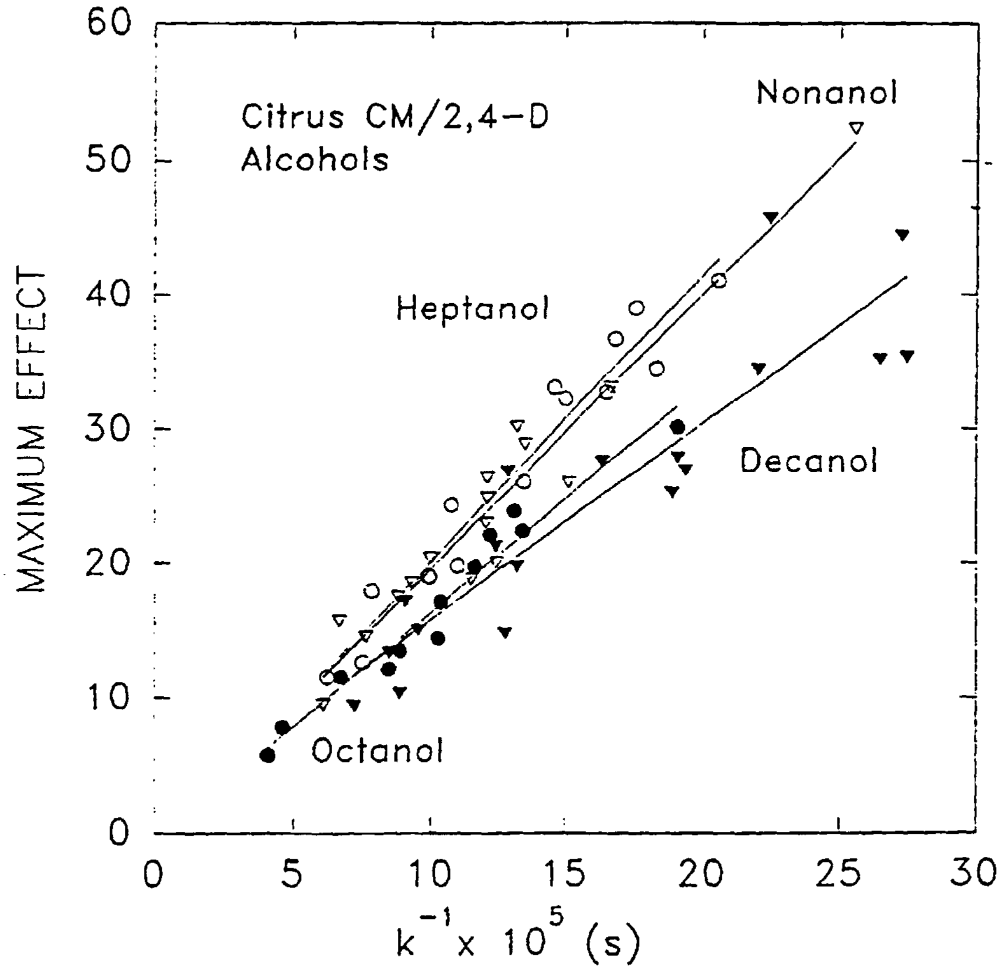
Citrus CM/2,4-D
Alcohols
Nonanol
Heptanol
Decanol
Octanol
MAXIMUM EFFECT
60
50
40
30
20
10
0
0
5
10
15
20
25
30
k$^{-1}$ x 10$^{5}$ (s)

**Abbildung 3**

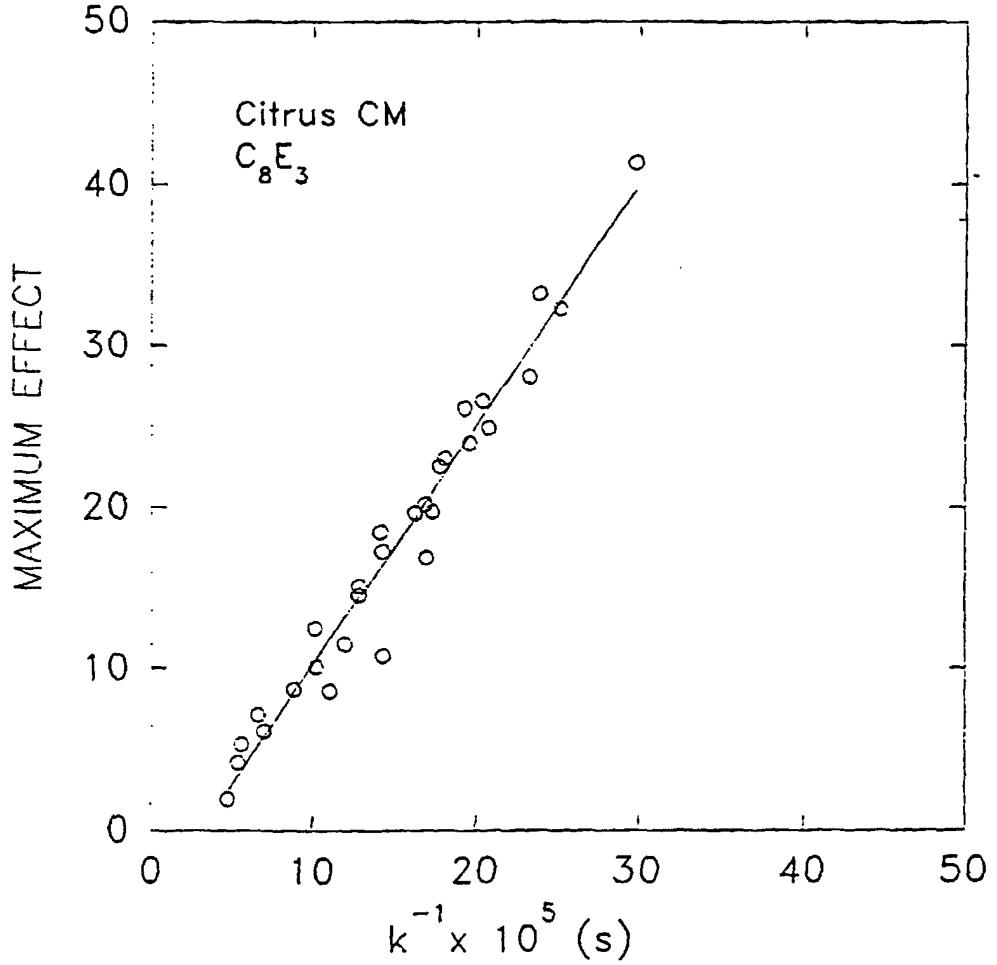


**Abbildung 4**

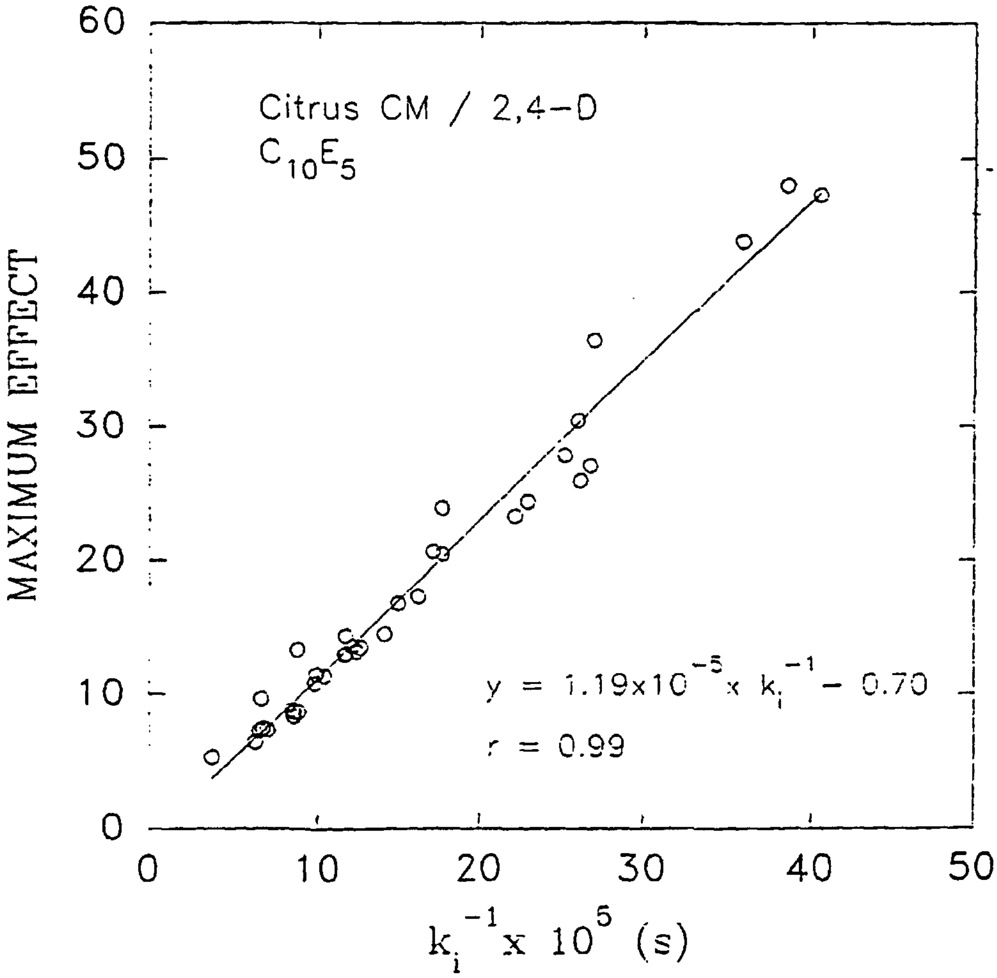
Citrus CM / 2,4-D
$C_{10}E_5$
MAXIMUM EFFECT
$y = 1.19 \times 10^{-5} \times k_i^{-1} - 0.70$
$r = 0.99$
$k_i^{-1} \times 10^5$ (s)
0
10
20
30
40
50
60

**Abbildung 5**

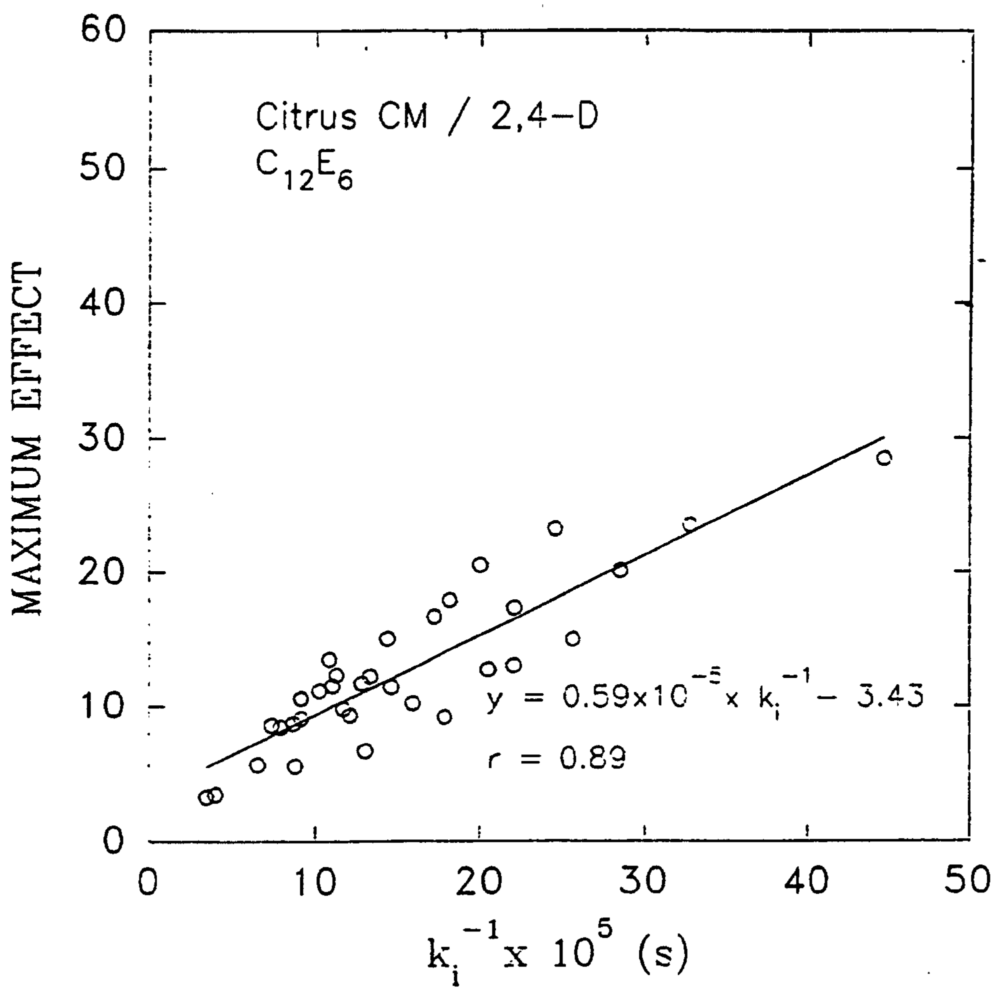

Citrus CM / 2,4-D
$C_{12}E_6$
MAXIMUM EFFECT
$y = 0.59 \times 10^{-5} \times k_i^{-1} - 3.43$
$r = 0.89$
$k_i^{-1} x\ 10^5$ (s)
0
10
20
30
40
50
60


**Abbildung 6**

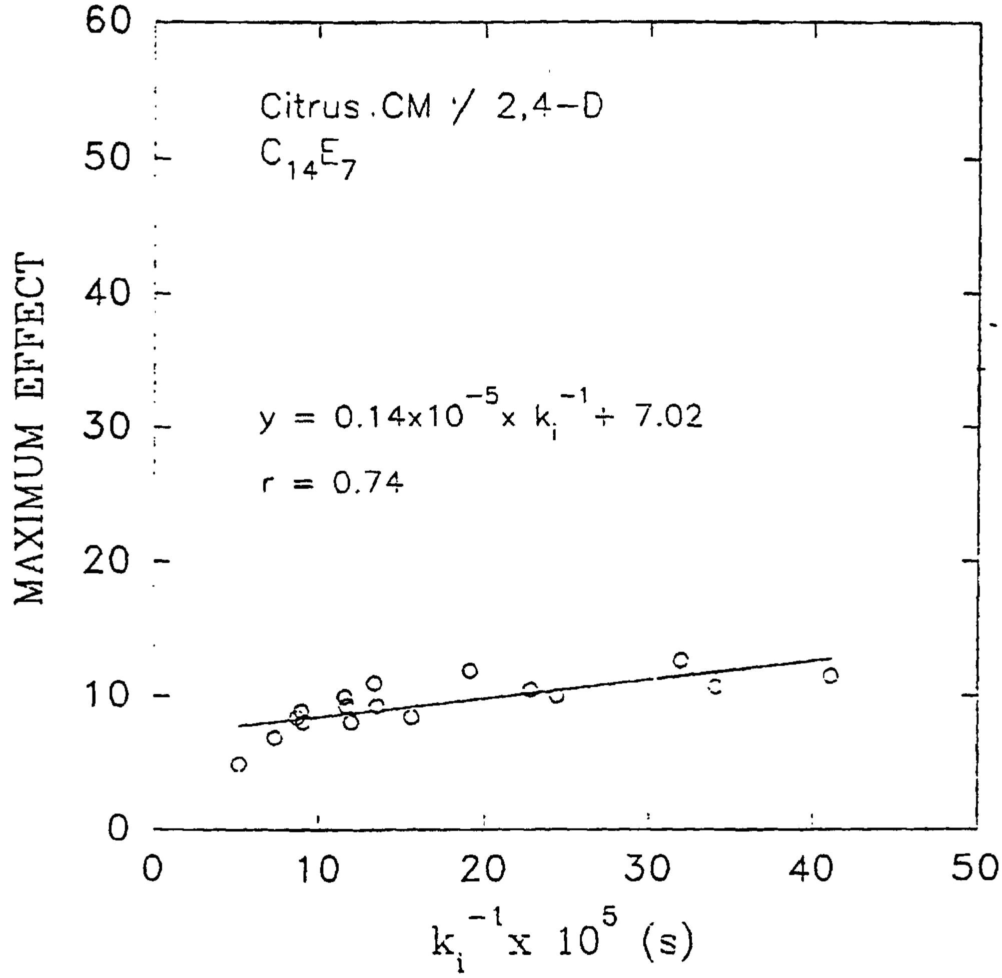
Citrus.CM / 2,4-D
$C_{14}E_7$
$y = 0.14x10^{-5} x\ k_i^{-1} + 7.02$
r = 0.74
MAXIMUM EFFECT
60
50
40
30
20
10
0
0
10
20
30
40
50
$k_i^{-1} x\ 10^5$ (s)

**Abbildung 7**

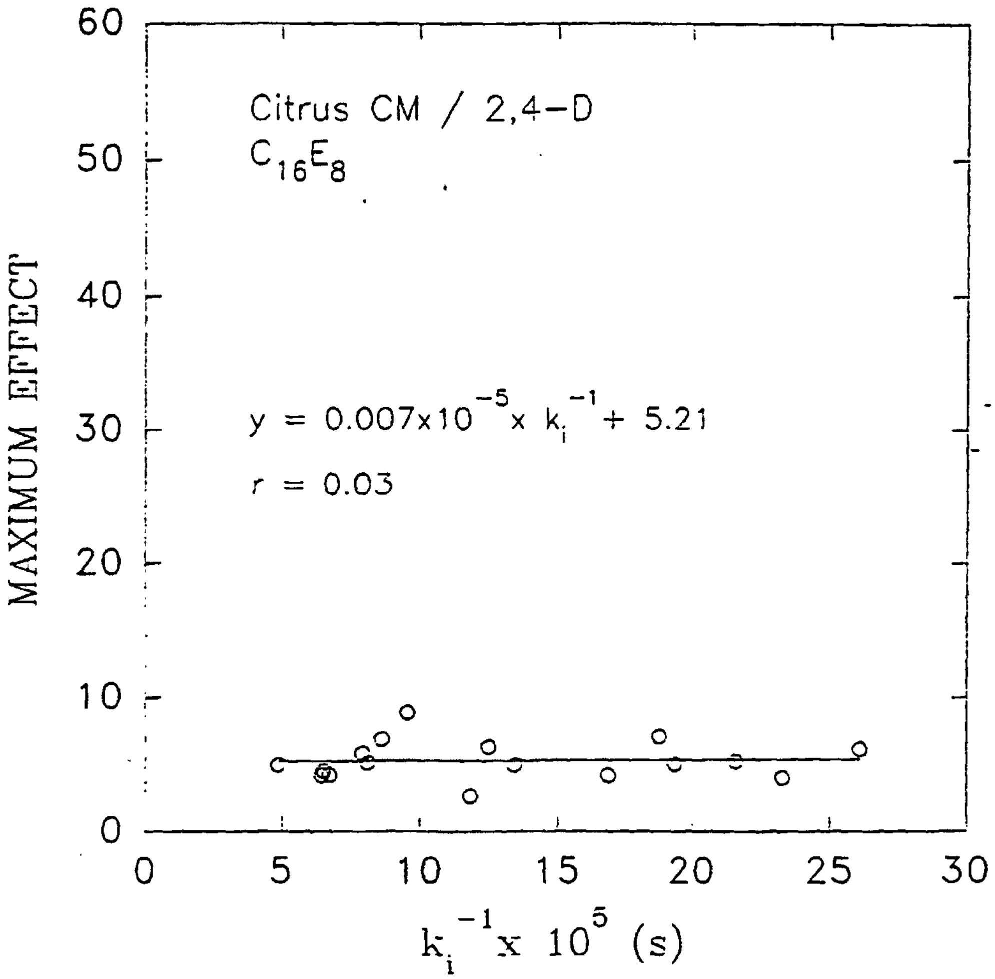
Citrus CM / 2,4-D
$C_{16}E_8$
y = 0.007x10$^{-5}$x $k_i^{-1}$ + 5.21
r = 0.03
MAXIMUM EFFECT
0
10
20
30
40
50
60
0
5
10
15
20
25
30
$k_i^{-1}$x $10^5$ (s)

**Abbildung 8**

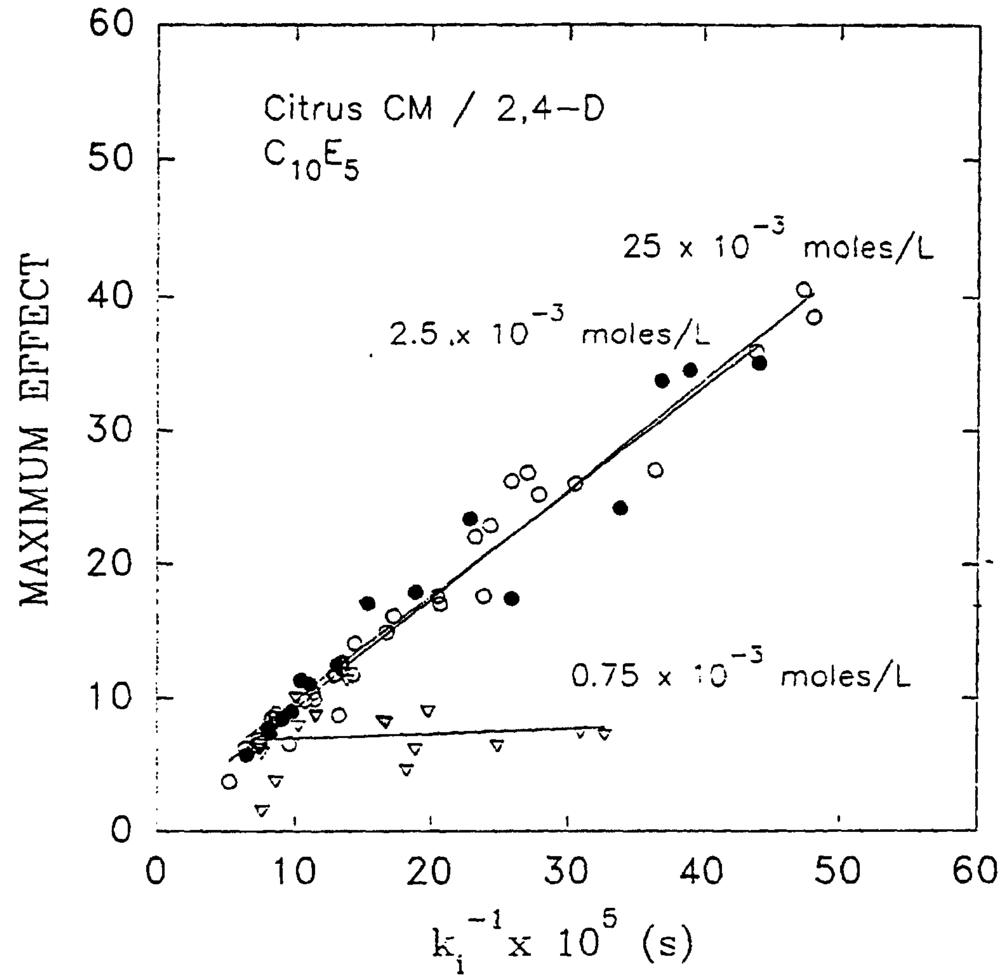
Citrus CM / 2,4-D
C10E5
25 x 10-3 moles/L
2.5 x 10-3 moles/L
0.75 x 10-3 moles/L
MAXIMUM EFFECT
0
10
20
30
40
50
60
ki-1 x 105 (s)


Abbildung 9

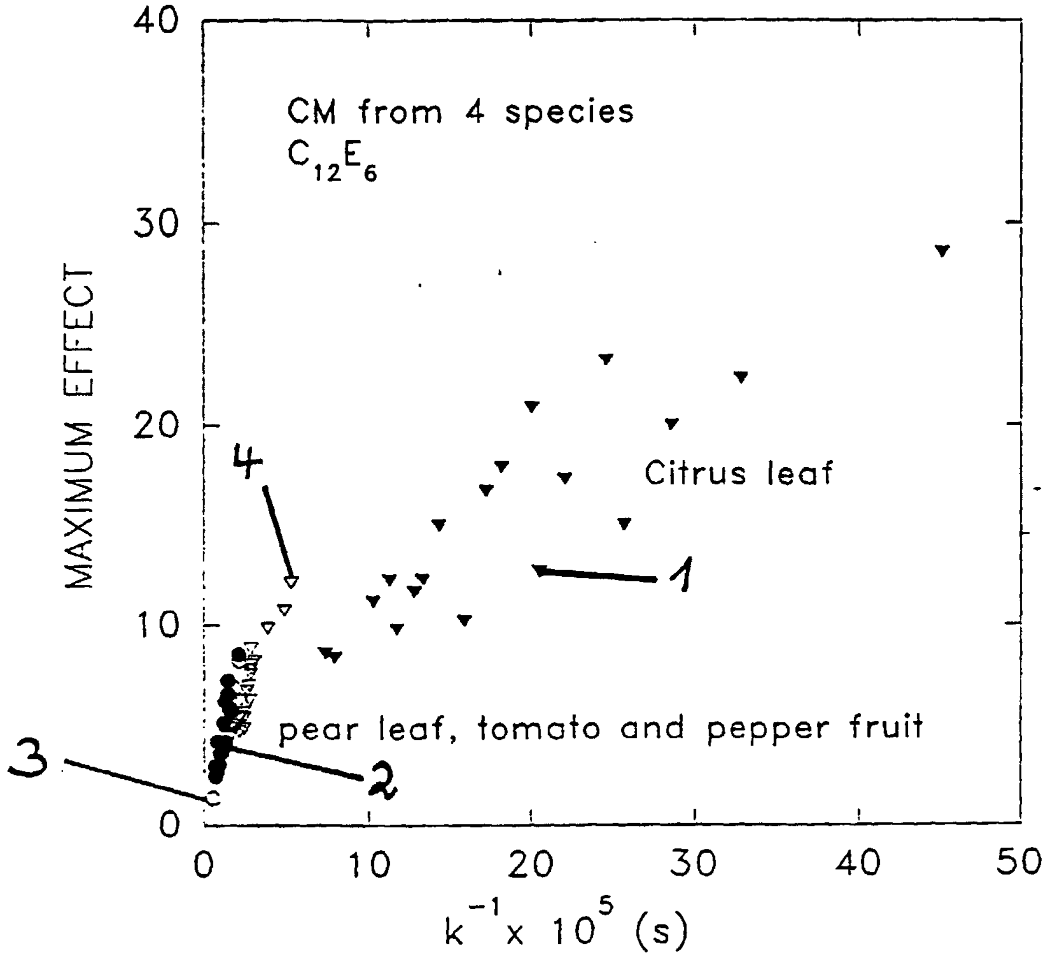


Abbildung 10

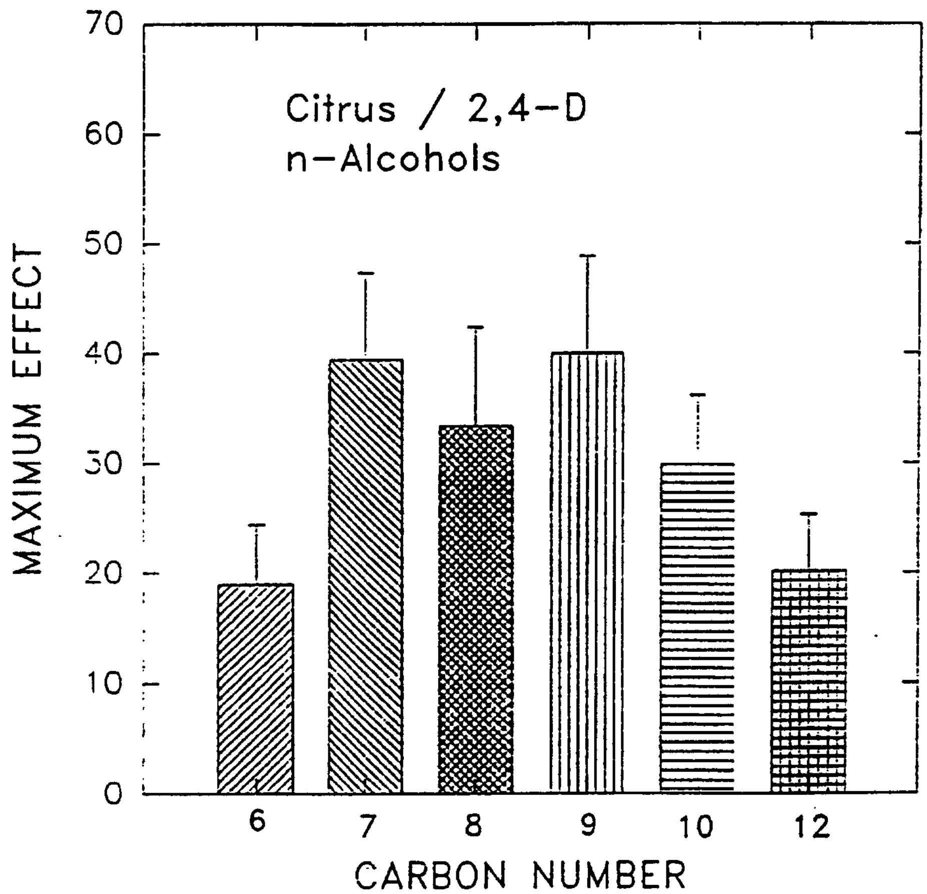


**Abbildung 1·1**

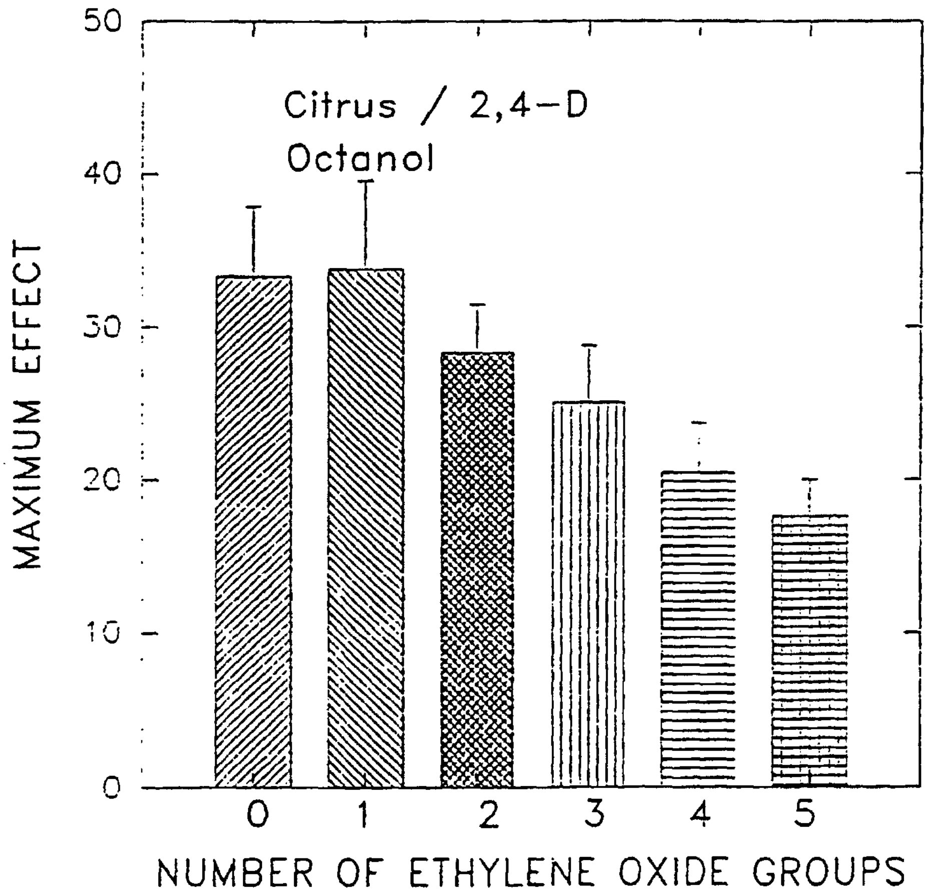


**Abbildung 12**

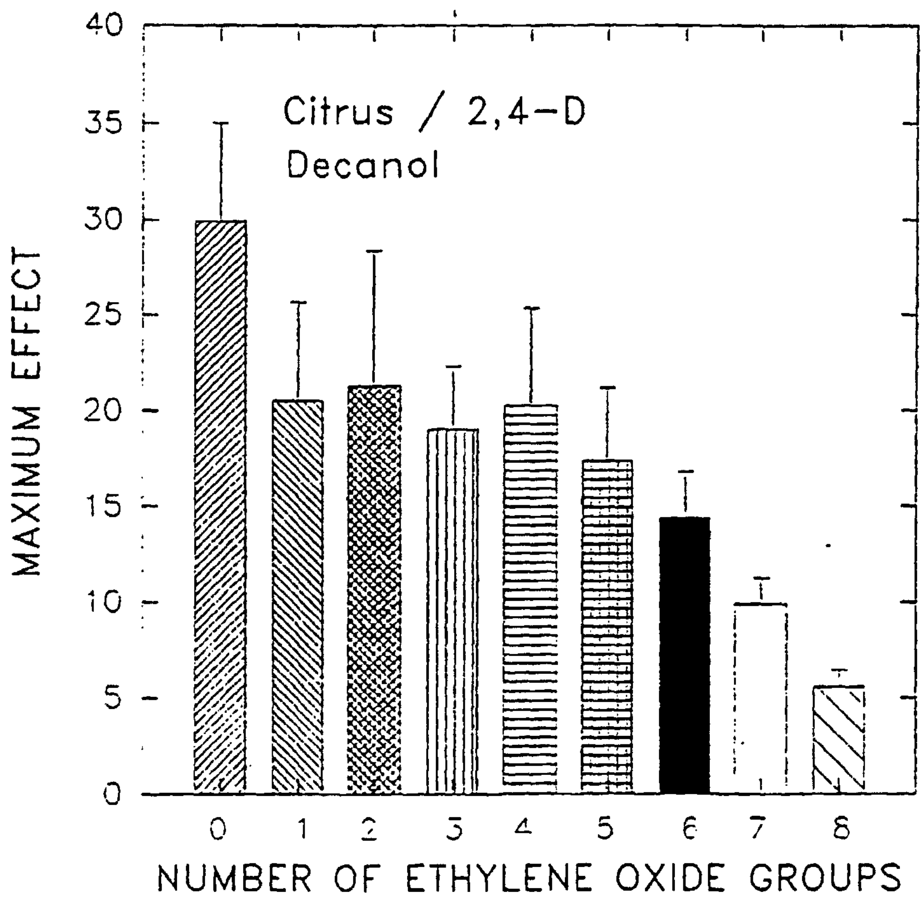


**Abbildung 13**

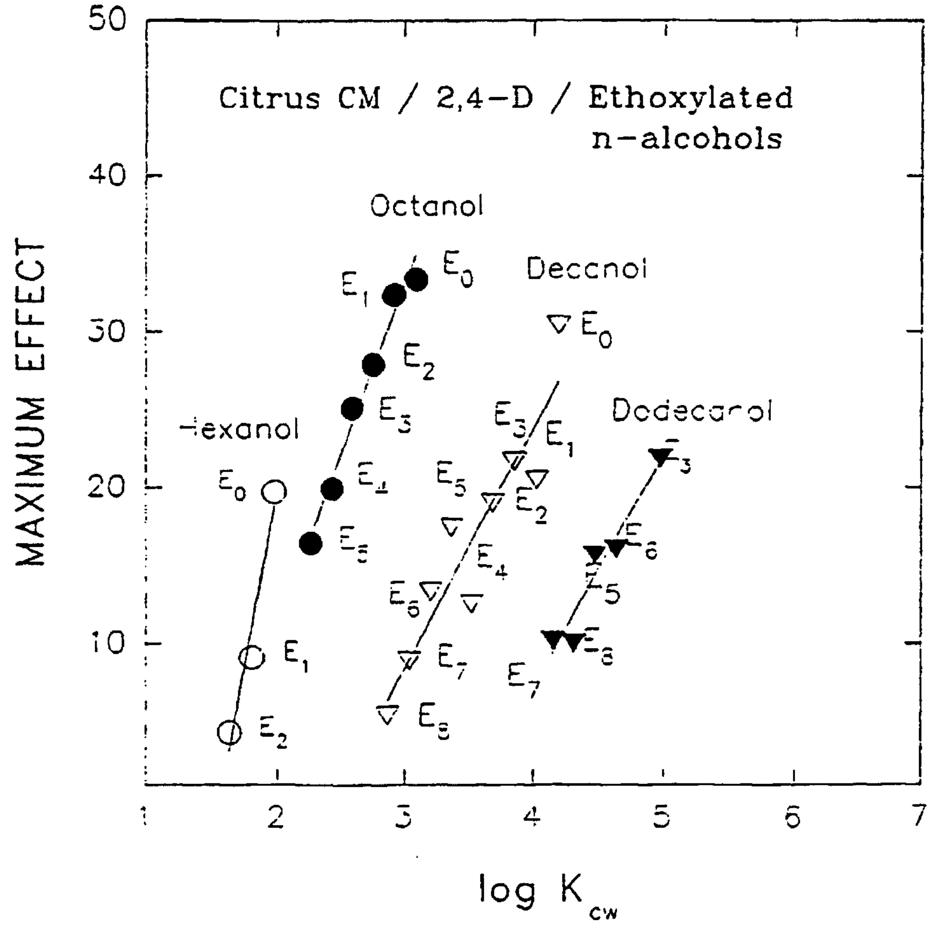


**Abbildung 14**

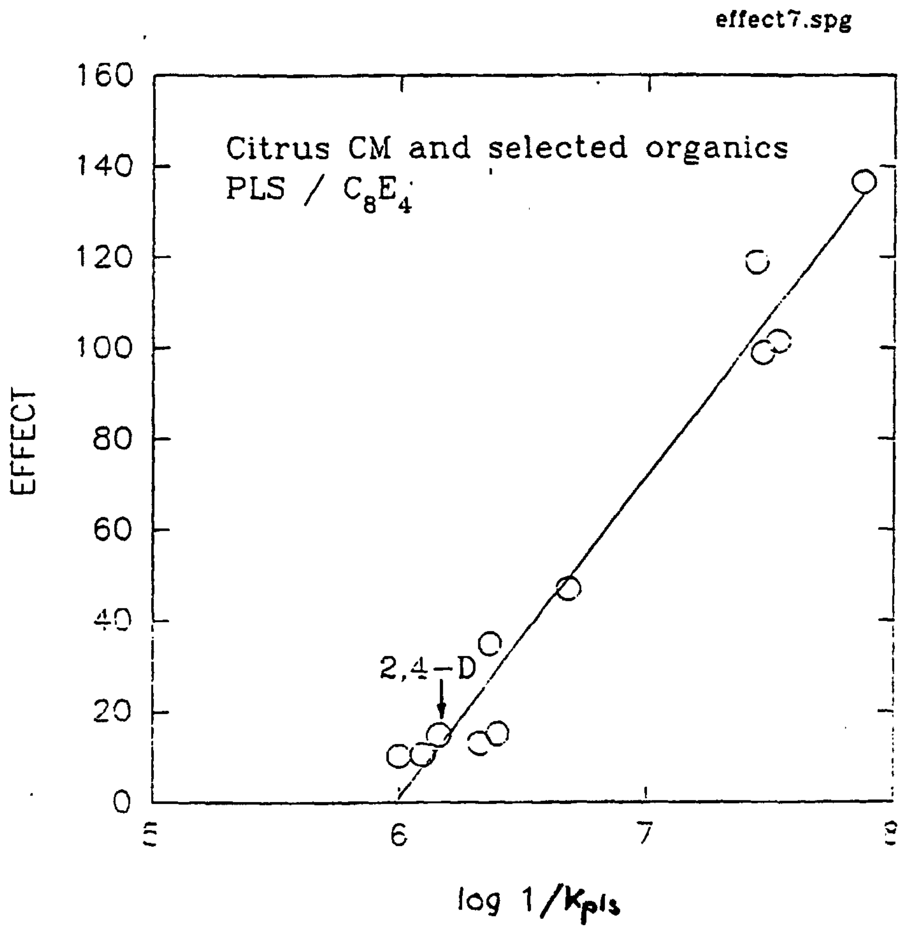


Abbildung 15

Abb. 16

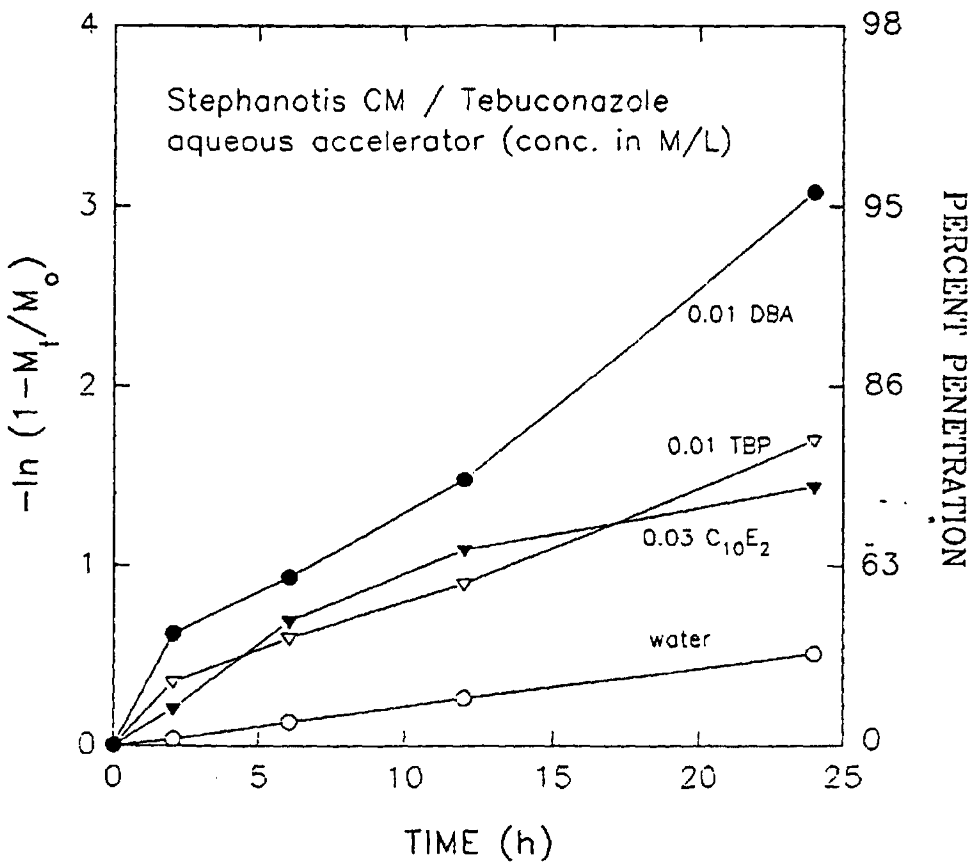
Stephanotis CM / Tebuconazole
aqueous accelerator (conc. in M/L)
0.01 DBA
0.01 TBP
0.03 C10E2
water
-ln (1-Mt/Mo)
PERCENT PENETRATION
TIME (h)
0
1
2
3
4
5
10
15
20
25
63
86
95
98